# EUROPEAN PATENT SPECIFICATION

(11) **EP 1 245 150 B1**
(45) Date of publication and mention of the grant of the patent: **26.07.2006**
(21) Application number: 02076177.1
(22) Date of filing: 26.03.2002
(51) Int. Cl.: A01J 5/017, A01J 5/007

(54) **A construction for automatically milking animals**
Konstruktion zum automatischen Melken von Tieren
Construction pour la traite automatique d'animaux

(30) Priority: 30.03.2001 NL 1017749
(43) Date of publication of application: 02.10.2002
(73) Proprietor: Lely Enterprises AG, 6300 ZUG (CH)
(72) Inventor: van den Berg, Karel, 2971 BR Bleskensgraaf (NL)
(74) Representative: Corten, Maurice Jean F.M.

(56) References cited:
- EP-A- 0 576 086
- WO-A-96/36212
- WO-A-99/31967

## Description

The invention relates to a construction for automatically milking animals according to the preamble of claim 1.

Such a construction is known. Patent EP-A-0 576 086 describes a construction in which malfunctions occurred are reported with the aid of a control system. The disadvantage of such a construction is i.a. that it is only reported that a particular component does not function anymore. Patent WO-99/31967 discloses a construction in which a cumulative value in relation to the useful life of a component is updated. When a threshold value has been reached, there is generated a signal indicating that the component has to be replaced. The disadvantage of such a construction is i.a. that the actual wear is not taken into account, so that components having a great divergence in their anticipated life are often replaced unnecessarily quickly.

The invention aims at improving and further automating such a construction. According to the invention this is achieved by the measures in the characterizing part of claim 1. The early determination of a diagnosis enables to warn a user and/or a service mechanic, who are/is then able to take in time the possibly required measures to avoid the anticipated malfunction. This enhances the reliability of the construction. Moreover it may appear that such measures will only be required at a later point of time, which is cost-saving.

With reference to the following description the invention will now be further elucidated.

Constructions for automatically milking animals, such as cows, by means of a milking robot are known per se. The milking robot is provided with means for automatically connecting teat cups to the teats of an animal to be milked. Said means comprise e.g. a robot arm and a sensor for detecting the position of the teats of the animal to be milked relative to the teat cups. There are further provided control means and e.g. cleaning means, a feeding device, an animal identification system and a milk reservoir. The control means may comprise a computer which is connected or capable of being connected with a number of measuring instruments (such as sensors) which are related to a number of functions of the construction, such as e.g. the milking process or parts thereof, the pre-treatment of an animal to be milked, the cleaning of the teats of an animal to be milked, the cleaning of the teat cups, the feeding of an animal to be milked, the measurement of the quantity of milk yielded.

A monitoring program for said functions is programmed or installed in the computer. The computer disposes of reference data which are related to said functions. The measuring instruments which are also related to said functions supply data to the computer. With the aid of the monitoring program the computer is suitable for determining, on the basis of a comparison of the data from one or more of the measuring instruments with the reference data, a diagnosis in relation to an anticipated fault in one or more of said functions. The monitoring program attributes a diagnosis for an anticipated malfunction to certain combinations of measurement data and reference data, as will be elucidated hereinafter. On the basis of the diagnosis it is possible to intervene before the malfunction actually occurs.

The computer may be programmed such that the diagnosis comprises the anticipated nature of the malfunction, the anticipated point of time or an anticipated time interval for the malfunction. The computer is preferably programmed such that the diagnosis comprises a warning to a user and/or a service mechanic. In this manner it is achieved that it is checked in time (before the malfunction actually occurs) whether action has to be taken in relation to a particular function or a particular component. In obvious cases the diagnosis may also comprise a concrete instruction to the user and/or the service mechanic in order to prevent the anticipated malfunction. Such an instruction may comprise an action to be taken by the user and/or the service mechanic and a time indication for the action to be taken.

In a preferred embodiment of the invention the diagnosis comprises an indication to the user and/or the service mechanic to check the condition of a component which is related to the anticipated malfunction and to repair and/or to replace said component if necessary. Thus it is possible to establish in an early stage whether the actual wear or abnormality of the component requires to repair or to replace the relevant component at once. When it appears that for example the actually occurred wear is smaller than would have been anticipated on the basis of the age or the use of the component, it is possible to decide still to continue to use the relevant component during a certain time. This is cost-saving, of course. The monitoring program supplies an appropriate warning in an early stage so that malfunctions in the construction can be avoided.

The computer may be suitable for selecting the diagnosis out of an available collection of diagnoses related to said functions. A great number of diagnoses of possible malfunctions may be stored in the computer. The collection of diagnoses may then at least partially depend on the size of the herd of animals to be milked. With a small herd there may occur partially other problems leading to malfunctions than with a large herd. In this manner the number of animals that will make use of the construction can be taken into account already at the installation of the construction.

The construction is preferably provided with means enabling to adapt and/or to extend the available collection of diagnoses. The construction may thus be adapted to the specific needs and circumstances of the farm where the construction is used. With some farms there may occur certain malfunctions that hardly play a part with other farms. The means may be suitable for adapting diagnoses or adding new diagnoses on the basis of the patterns of data from the measuring instruments established during the use of the construction. When it appears for example that during the failure-free use of a certain component there is continuously generated a malfunction diagnosis, then the computer concludes that this diagnosis is not correct. In this manner the disadvantageous results of incorrect reference data can be corrected automatically. It is also possible to add a corresponding, improved diagnosis when a particular fault in a particular function occurs a number of times earlier than would have been expected on the basis of the existing diagnoses. The collection of diagnoses is thus automatically adapted to the local circumstances of the construction.

The means may be suitable for adapting and/or extending the available collection of diagnoses in dependence of the size of the herd of animals to be milked and/or the (possibly measured) intensity with which the construction is used. The fact is that these parameters may strongly influence the nature and the frequency of anticipated malfunctions. Of course, there are also other influences, such as e.g. the degree of contamination of the environment in which the construction is used. In a clean shed there will occur fewer problems than in a strongly contaminated one.

The construction is suitable for indicating, for example visually and/or acoustically, the diagnosis determined by the computer, or at least the instruction pertaining thereto.

The measuring instruments may comprise sensors, clocks and/or counters. There may for example be provided a sound sensor by means of which it is possible to establish sounds that deviate from reference patterns. On the basis of the measurements it is possible for example to generate a diagnosis having for instruction "check vacuum pump" or "replace pulsator within 24 hours". It is also possible to use sensors for measuring the electricity consumption of certain components, the air consumption, the water consumption, the milk discharge, the feed supply, the conductivity of cleaning liquid, the temperature in the milk cooling tank, the pulsation pattern in the teat cups, etc. With the aid of time sensors or clocks it is possible to determine for example (cumulative) consumption times of components, connection times of the teat cups, time required for building up vacuum, etc. By means of counting sensors or counters it is possible for example to determine the number of pulsations of a pulsator or the number of times a component is used.

The reference data may comprise an interval for a measured value to be determined by means of one or more measuring instruments. The monitoring program selects for example the diagnosis "sound level too high; check vacuum pump" when the measured sound level of a vacuum pump is above 70 decibel during at least 30 seconds. The reference data may also comprise an anticipated life or an anticipated failure-free useful life for a function-related component of the construction. When the point of time is reached at which e.g. 90% of the useful life of a component has elapsed, the instruction may be "check within 6 hours condition of component and determine whether it must be replaced; if not, give new time interval for further use".

The computer is preferably suitable for determining in a parallel manner more than one diagnosis and for attributing an urgency to each diagnosis. The construction is then capable of indicating the diagnoses determined or at least the instructions pertaining thereto in order of urgency. This enhances the user-friendliness of the construction.

The construction may comprise a number of components known per se, such as e.g. coils and motors for driving and controlling other components, a compressor, a vacuum pump and an air system connected therewith with air lines and valves, a pulsator of which e.g. pulsation speed and pulsation ratio are adjustable, a cleaning system with a water pump, a water tank with a three-way-valve and liquid lines, teat cups with a liner, a sucking aperture, a tilting mechanism and a cord, milk lines, milk meters, milk filters, a milk glass with a float, a milk tank with a contents meter, a feeding system with a feeding trough, a feed auger and a weighing cell, a box floor with a weighing device and weighing cells, conductivity sensors, cleaning means with lye and/or acid, milk separation means, a laser measuring system for determining the teat positions with a laser window, lifting cylinders for the teat cups, stepper motors and other drive mechanisms for having certain movements performed by certain components, milk flow sensors, milk pulsation tubes with tube shut-off valves, a milk cooling tank with a cooling system and a cleaning system, an entrance and an exit with a gate, an animal identification system, etc.

The computer may for example be programmed such that when one or more measuring instruments establish an increasing electricity consumption, there is determined a diagnosis implying "check rinsing and/or motors". Therefore, the diagnosis needs not to contain literally the words "check rinsing and/or motors", but may also indicate that a problem with rinsing and/or motors may be anticipated.

A number of further advantageous embodiments are described in the further subclaims.

The invention further relates to a construction for automatically milking animals, said construction being provided with a milking robot and a computer, which computer is capable of being connected with a number of measuring instruments which are related to a number of condition parameters of an animal to be milked. According to the invention a monitoring program for said parameters is installed in the computer, with the aid of which the computer is suitable for determining, on the basis of a comparison of data from one or more of the measuring instruments with reference data related to said parameters, a diagnosis in relation to an anticipated undesired deviation in one or more of said parameters. Again the early determination of a diagnosis enables to warn a user and/or a veterinarian, who are/is then able to take in time the possibly required measures to avoid the anticipated undesired deviation.

The computer may further be suitable for continuously adapting the reference data on the basis of measured quantities. The computer may also be suitable for automatically generating the reference data. The reference data may depend on the herd of animals to be milked and/or on the intensity with which the construction is used.

The construction is preferably provided with means for transmitting the diagnosis determined by the computer by telephone and/or as SMS-message to a user and/or a service mechanic. In this manner the user and/or the service mechanic are/is able to react promptly.

The computer may be programmed such that when one or more measuring instruments establish a slowly starting milk flow profile, there is determined a diagnosis implying "prolong the pre-treatment". A number of further advantageous embodiments are described in the further subclaims.

## Claims

1. A construction for automatically milking animals, said construction being provided with a milking robot and a computer which is capable of being connected with a number of measuring instruments which are related to a number of functions of the construction, **characterized in that** a monitoring program for said functions is installed in the computer, with the aid of which the computer is suitable for determining, on the basis of a comparison of data from one or more of the measuring instruments with reference data related to said functions, a diagnosis in relation to an anticipated fault in one or more of said functions.

2. A construction as claimed in claim 1, **characterized in that** the computer is programmed such that the diagnosis comprises the anticipated nature of the malfunction.

3. A construction as claimed in claim 1 or 2, **characterized in that** the computer is programmed such that the diagnosis comprises the anticipated point of time or an anticipated time interval for the malfunction.

4. A construction as claimed in any one of claims 1 to 3, **characterized in that** the computer is programmed such that the diagnosis comprises a warning to a user and/or a service mechanic.

5. A construction as claimed in any one of claims 1 to 4, **characterized in that** the computer is programmed such that the diagnosis comprises an instruction to avoid the anticipated malfunction.

6. A construction as claimed in claim 5, **characterized in that** the instruction comprises an action to be taken by a user and/or a service mechanic.

7. A construction as claimed in any one of claims 4 to 6, **characterized in that** the diagnosis comprises an indication to the user and/or the service mechanic to check the condition of a component related to the anticipated malfunction and to repair and/or to replace said component if necessary.

8. A construction as claimed in any one of claims 5 to 7, **characterized in that** the instruction comprises a time indication for the action to be taken.

9. A construction as claimed in any one of claims 1 to 8, **characterized in that** the computer is suitable for selecting the diagnosis out of an available collection of diagnoses related to said functions.

10. A construction as claimed in claim 9, **characterized in that** the collection of diagnoses depends at least partially on the size of the herd of animals to be milked.

11. A construction as claimed in claim 10, **characterized in that** the construction is provided with means enabling to adapt and/or to extend the available collection of diagnoses.

12. A construction as claimed in claim 11, **characterized in that** the means are suitable for adjusting diagnoses or adding new diagnoses on the basis of patterns of data from the measuring instruments established during the use of the construction.

13. A construction as claimed in claim 11 or 12, **characterized in that** the means are suitable for adapting and/or extending the available collection of diagnoses in dependence of the size of the herd of animals to be milked and/or the intensity with which the construction is used.

14. A construction as claimed in any one of claims 1 to 13, **characterized in that** the construction is suitable for indicating the established diagnosis.

15. A construction as claimed in any one of claims 1 to 14, **characterized in that** the construction is suitable for indicating at least the instruction pertaining to the established diagnosis.

16. A construction as claimed in any one of claims 1 to 15, **characterized in that** the construction is suitable for indicating visually and/or acoustically the established diagnosis or at least the instruction pertaining thereto.

17. A construction as claimed in any one of claims 1 to 16, **characterized in that** the measuring instruments comprise at least one sensor.

18. A construction as claimed in any one of claims 1 to 17, **characterized in that** the measuring instruments comprise at least one clock.

19. A construction as claimed in any one of claims 1 to 18, **characterized in that** the measuring instruments comprise at least one counter.

20. A construction as claimed in any one of claims 1 to 19, **characterized in that** the reference data comprise an interval for a measured value to be determined by means of one or more measuring instruments.

21. A construction as claimed in any one of claims 1 to 20, **characterized in that** the reference data comprise an anticipated life or an anticipated failure-free useful life for a function-related component of the construction.

22. A construction as claimed in any one of claims 1 to 21, **characterized in that** the computer is suitable for determining in a parallel manner more than one diagnosis.

23. A construction as claimed in claim 22, **characterized in that** the construction is suitable for attributing an urgency to every diagnosis.

24. A construction as claimed in claim 23, **characterized in that** the construction is suitable for indicating the determined diagnoses or at least the instructions pertaining thereto in order of urgency.

25. A construction as claimed in any one of claims 1 to 24, **characterized in that** the computer is programmed such that when one or more measuring instruments establish an increasing electricity consumption, there is determined a diagnosis implying "check rinsing and/or motors".

26. A construction as claimed in any one of claims 1 to 25, **characterized in that** the computer is programmed such that when one or more measuring instruments establish a deviating air consumption curve, there is determined a diagnosis implying "check air system and/or compressor".

27. A construction as claimed in any one of claims 1 to 26, **characterized in that** the computer is programmed such that when one or more measuring instruments establish a deviating water consumption curve, there is determined a diagnosis implying "leakage and/or obstruction".

28. A construction as claimed in any one of claims 1 to 27, **characterized in that** the computer is programmed such that when one or more measuring instruments establish a deviating milk discharge to the milk tank, there is determined a diagnosis implying "leakage and/or obstruction of a milk filter".

29. A construction as claimed in any one of claims 1 to 28, **characterized in that** the computer is programmed such that when one or more measuring instruments establish a deviating feed supply, there is determined a diagnosis implying "leakage and/or obstruction of a feed auger".

30. A construction as claimed in any one of claims 1 to 29, **characterized in that** the computer is programmed such that when one or more measuring instruments establish a deviating sound measurement, there is determined a diagnosis implying "check vacuum pump and/or pulsator".

31. A construction as claimed in any one of claims 1 to 30, **characterized in that** the computer is programmed such that when one or more measuring instruments establish a deviating filling time for a water tank, there is determined a diagnosis implying "insufficient water pressure and/or leakage".

32. A construction as claimed in any one of claims 1 to 31, **characterized in that** the computer is programmed such that when one or more measuring instruments establish failed connections of the teat cups and/or a deviating weight of animals to be milked, there is determined a diagnosis implying "weighing floor jammed and/or malfunction weighing cell".

33. A construction as claimed in any one of claims 1 to 32, **characterized in that** the computer is programmed such that when one or more measuring instruments establish a deviating signal pattern of a feed weighing cell with various animals, there is determined a diagnosis implying "feeding trough jammed and/or malfunction weighing cell".

34. A construction as claimed in any one of claims 1 to 33, **characterized in that** the computer is programmed such that when one or more measuring instruments establish a positive drifting of the zero level of the weight of the box floor, there is determined a diagnosis implying "accumulation of dirt on box floor".

35. A construction as claimed in any one of claims 1 to 34, **characterized in that** the computer is programmed such that when one or more measuring instruments establish an increased air consumption per milking and/or per cleaning, there is determined a diagnosis implying "leaking valves".

36. A construction as claimed in any one of claims 1 to 35, **characterized in that** the computer is programmed such that when one or more measuring instruments establish an increased conductivity of the pre-rinsing water at the end of the pre-rinsing, there is determined a diagnosis implying "insufficient pre-rinsing due to too low water pressure and/or insufficient emptying by blowing of line and/or leaking three-way-valve tank and/or contaminated, defective and/or drifted conductivity sensors".

37. A construction as claimed in any one of claims 1 to 36, **characterized in that** the computer is programmed such that when one or more measuring instruments establish an increased conductivity of the main cleaning water at the end of the main cleaning, there is determined a diagnosis implying "insufficient main cleaning due to too low lye/acid concentration and/or too low frequency lye/acid cleaning and/or contaminated, defective and/or drifted conductivity sensors".

38. A construction as claimed in any one of claims 1 to 37, **characterized in that** the computer is programmed such that when one or more measuring instruments establish an increased conductivity of the post-rinsing water at the end of the post-rinsing, there is determined a diagnosis implying "insufficient post-rinsing and/or contaminated, defective and/or drifted conductivity sensors".

39. A construction as claimed in any one of claims 1 to 38, **characterized in that** the computer is programmed such that when one or more measuring instruments establish the automatic consecutive separation of milk from various animals, there is determined a diagnosis implying "check on the basis of the separated milk whether there are malfunctions in the sensors".

40. A construction as claimed in any one of claims 1 to 39, **characterized in that** the computer is programmed such that when one or more measuring instruments establish more movement in the weighing floor than on average, there is determined a diagnosis implying "check the vacuum level of the vacuum pump and/or the condition of the teat cup liners".

41. A construction as claimed in any one of claims 1 to 40, **characterized in that** that the computer is programmed such that when one or more measuring instruments establish the non-taking of feed by various animals, there is determined a diagnosis implying "check the weighing cell of the feeding trough".

42. A construction as claimed in any one of claims 1 to 41, **characterized in that** the computer is programmed such that when one or more measuring instruments establish a decreased pumping away speed of milk from the milk glass to the milk tank, there is determined a diagnosis implying "obstruction milk filter and/or pump".

43. A construction as claimed in any one of claims 1 to 42, **characterized in that** the computer is programmed such that when one or more measuring instruments establish a deviation of the centre of gravity of the box floor with the animal to be milked, there is determined a diagnosis implying "feed used up and/or feed auger and/or weighing cell feeding trough defective".

44. A construction as claimed in any one of claims 1 to 43, **characterized in that** the computer is programmed such that when one or more measuring instruments establish a longer connection time of the teat cups than on average and more movement in the weighing floor than on average, there is determined a diagnosis implying "check the feed augers and/or the presence of vermin".

45. A construction as claimed in any one of claims 1 to 44, **characterized in that** the computer is programmed such that when one or more measuring instruments establish a changed milk flow, there is determined a diagnosis implying "check the pulsation adjustments; feed used up and/or feed auger and/or weighing cell feeding trough defective".

46. A construction as claimed in any one of claims 1 to 45, **characterized in that** the computer is programmed such that when one or more measuring instruments establish the absence of vacuum on a teat cup after several attempts, there is determined a diagnosis implying "check the tilting mechanism and/or the cord of the teat cup and/or the laser window".

47. A construction as claimed in any one of claims 1 to 46, **characterized in that** the computer is programmed such that when one or more measuring instruments establish a lower connection time with a teat cup in comparison with the other teat cups, there is determined a diagnosis implying "check the position of the teat cup and/or the teat cup liner (shaft and top)".

48. A construction as claimed in any one of claims 1 to 47, **characterized in that** the computer is programmed such that when one or more measuring instruments establish a lower average milking speed and/or a lower average milk flow, there is determined a diagnosis implying "check the vacuum level and/or the pulsation adjustments and/or the liners of the teat cups".

49. A construction as claimed in any one of claims 1 to 48, **characterized in that** the computer is programmed such that when one or more measuring instruments establish a higher connection time of all teat cups, there is determined a diagnosis implying "laser window contaminated and/or leakage in a lifting cylinder".

50. A construction as claimed in any one of claims 1 to 49, **characterized in that** the computer is programmed such that when one or more measuring instruments establish a deviating signal pattern of a milk flow sensor for various animals, there is determined a diagnosis implying "check the liner and/or the sucking aperture of the teat cup".

51. A construction as claimed in any one of claims 1 to 50, **characterized in that** the computer is programmed such that when one or more measuring instruments establish a deviating pulsation pattern for all teat cups, there is determined a diagnosis implying "check the vacuum level and/or the vacuum line of the pulsator".

52. A construction as claimed in any one of claims 1 to 51, **characterized in that** the computer is programmed such that when one or more measuring instruments establish a deviating time required for building up a vacuum, there is determined a diagnosis implying "check vacuum pump and/or leakage air".

53. A construction as claimed in any one of claims 1 to 52, **characterized in that** the computer is programmed such that when one or more measuring instruments establish a deviating time required for a known movement, there is determined a diagnosis implying "drive mechanism defective and/or leakage".

54. A construction as claimed in any one of claims 1 to 53, **characterized in that** the computer is programmed such that when one or more measuring instruments establish deviating data of the milk cooling tank (temperature, cleaning times, cleaning temperature, milk quantities, alarms) there is determined a diagnosis implying "check cooling system and/or cleaning system milk cooling tank".

55. A construction as claimed in any one of claims 1 to 54, **characterized in that** the computer is programmed such that when one or more measuring instruments establish a discrepancy between milk yield data from the milk meter and data from the contents meter of the milk tank, there is determined a diagnosis implying "check milk meter and/or contents meter milk tank".

56. A construction as claimed in any one of claims 1 to 55, **characterized in that** the computer is programmed such that when one or more measuring instruments establish a increased number of stepper motor errors, there is determined a diagnosis implying "check stepper motor".

57. A construction as claimed in any one of claims 1 to 56, **characterized in that** the computer is programmed such that when one or more measuring instruments establish a visiting frequency reduced to zero of the milking robot, there is determined a diagnosis implying "animal obstructs entrance and/or exit and/or gate defective".

58. A construction as claimed in any one of claims 1 to 57, **characterized in that** the computer is programmed such that when one or more measuring instruments establish the consecutive non-identification of a number of animals, there is determined a diagnosis implying "check animal identification system".

59. A construction as claimed in any one of claims 1 to 58, **characterized in that** the computer is programmed such that when one or more measuring instruments establish a deviating pulsation pattern, there is determined a diagnosis implying "check liner of milk pulsation tube and/or tube shut-off valves".

60. A construction as claimed in any one of claims 1 to 59, **characterized in that** the computer is programmed such that when one or more measuring instruments establish a discrepancy between the weight pattern of the animal to be milked during milking and the measured quantity of milk yielded, consumed feed and produced dung, there is determined a diagnosis implying "check weighing sensors".

61. A construction as claimed in any one of claims 1 to 60, **characterized in that** the computer is programmed such that when one or more measuring instruments establish an increased maximum milk flow, there is determined a diagnosis implying "check float in milk glass".

62. A construction as claimed in any one of claims 1 to 61, **characterized in that** the computer is programmed such that when one or more measuring instruments establish a decreased average milk flow and a decreased maximum milk flow, there is determined a diagnosis implying "check float in milk glass".

63. A construction as claimed in any one of claims 1 to 62, **characterized in that** the computer is programmed such that when one or more measuring instruments establish a longer time between the generation of a vacuum in a teat cup and the start of the milk flow from the relevant quarter in combination with a shorter milking time for the relevant quarter, there is determined a diagnosis implying "insufficient sensitivity with relevant milk flow sensor".

64. A construction as claimed in any one of claims 1 to 63, **characterized in that** the computer is programmed such that when one or more measuring instruments establish a shorter time between the generation of a vacuum in a teat cup and the start of the milk flow from the relevant quarter in combination with a longer milking time for the relevant quarter, there is determined a diagnosis implying "too high sensitivity with relevant milk flow sensor".

65. A construction as claimed in any one of claims 1 to 64, **characterized in that** the computer is programmed such that when one or more measuring instruments establish a longer time between the generation of a vacuum in a teat cup and the start of the relevant milk flow from the left or the right quarters in combination with a shorter milking time for the relevant quarters, there is determined a diagnosis implying "leakage in teat cup liner and/or pulsation tube and/or defective pulsator".

66. A construction as claimed in any one of claims 1 to 65, **characterized in that** the computer is programmed such that when one or more measuring instruments establish great differences between the quarters in the time between the generation of a vacuum in a teat cup and the start of the relevant milk flow, there is determined a diagnosis implying "check milk flow sensors".

67. A construction as claimed in any one of claims 1 to 66, **characterized in that** the computer is programmed such that when one or more measuring instruments establish an increased number of unsuccessful attempts to connect the teat cups, there is determined a diagnosis implying "check laser measuring system".

68. A construction as claimed in any one of claims 1 to 67, **characterized in that** the computer is programmed such that when one or more measuring instruments establish a deviating production value (kg milk per hour), there is determined a diagnosis implying "check the milking robot".

69. A construction for automatically milking animals, said construction being provided with a milking robot and a computer, said computer being connectable with a number of measuring instruments which are related to a number of condition parameters of an animal to be milked, **characterized in that** a monitoring program for said parameters is installed in the computer, with the aid of which the computer is suitable for determining a diagnosis in relation to an anticipated undesired deviation in one or more of said parameters on the basis of a comparison of data from one or more of the measuring instruments with reference data related to said parameters.

70. A construction as claimed in any one of claims 1 to 69, **characterized in that** the computer is suitable for continuously adapting the reference data on the basis of measured quantities.

71. A construction as claimed in any one of claims 1 to 70, **characterized in that** the computer is suitable for automatically generating the reference data.

72. A construction as claimed in any one of claims 1 to 71, **characterized in that** the reference data depend on the herd of animals to be milked.

73. A construction as claimed in any one of claims 1 to 72, **characterized in that** the reference data depend on the intensity with which the construction is used.

74. A construction as claimed in any one of claims 1 to 73, **characterized in that** the construction is provided with means for transmitting the diagnosis determined by the computer by telephone and/or as SMS-message to a user and/or a service mechanic.

75. A construction as claimed in any one of claims 70 to 74, **characterized in that** the computer is programmed such that when one or more measuring instruments establish a slowly starting milk flow profile, there is determined a diagnosis implying "prolong the pre-treatment".

76. A construction as claimed in any one of claims 70 to 75, **characterized in that** the computer is programmed such that when one or more measuring instruments establish a combination of increased conductivity, longer dead milking time, deviating colour and volume for a particular quarter, there is determined a diagnosis implying "mastitis for said quarter".

77. A construction as claimed in any one of claims 70 to 76, **characterized in that** the computer is programmed such that when one or more measuring instruments establish an increased speed of emptying the feeding trough for an animal, there is determined a diagnosis implying "check animal's ration".

78. A construction as claimed in any one of claims 70 to 77, **characterized in that** the computer is programmed such that when one or more measuring instruments establish a decreased speed of emptying the feeding trough for various animals, there is determined a diagnosis implying "feed decayed and/or not tasty".

79. A construction as claimed in any one of claims 70 to 78, **characterized in that** the computer is programmed such that when one or more measuring instruments establish a deviating signal pattern with a milk flow sensor, there is determined a diagnosis implying "check relevant udder quarter".

80. A construction as claimed in any one of claims 70 to 79, **characterized in that** the computer is programmed such that when one or more measuring instruments establish a deviation in the milk yield, the temperature, the feed consumption and the movement in the box, there is determined a diagnosis implying "attention heat".

81. A construction as claimed in any one of claims 70 to 80, **characterized in that** the computer is programmed such that when one or more measuring instruments establish a decreased feed consumption of a particular animal, there is determined a diagnosis implying "check animal's health".

82. A construction as claimed in any one of claims 70 to 81, **characterized in that** the computer is programmed such that when one or more measuring instruments establish a great divergence in the measurements of the weighing floor, there is determined a diagnosis implying "animal unquiet".

83. A construction as claimed in any one of claims 70 to 82, **characterized in that** the computer is programmed such that when one or more measuring instruments establish a great divergence in the measurements of the weight of the feeding trough, there is determined a diagnosis implying "animal unquiet".

84. A construction as claimed in any one of claims 70 to 83, **characterized in that** the computer is programmed such that when one or more measuring instruments establish a decreased speed of emptying the feeding trough for an animal, there is determined a diagnosis implying "check animal's health".

85. A construction as claimed in any one of claims 70 to 84, **characterized in that** the computer is programmed such that when one or more measuring instruments establish a decreased visiting frequency of an animal to the milking robot, there is determined a diagnosis implying "check animal's health".

86. A construction as claimed in any one of claims 70 to 85, **characterized in that** the computer is programmed such that when one or more measuring instruments establish a too low milk yield in comparison with the animal's ration, there is determined a diagnosis implying "ration not correct and/or check animal's activity".

87. A construction as claimed in any one of claims 70 to 86, **characterized in that** the computer is programmed such that when one or more measuring instruments establish a drifting of the teat positions in height, there is determined a diagnosis implying "dropsy and/or sagging udder".

88. A construction as claimed in any one of claims 70 to 87, **characterized in that** the computer is programmed such that when one or more measuring instruments establish that an animal slowly enters and/or leaves the milking robot, there is determined a diagnosis implying "check claw condition".

## Patentansprüche

1. Vorrichtung zum automatischen Melken von Tieren, wobei die Vorrichtung mit einem Melkroboter und einem Computer versehen ist, der mit einer Anzahl von Meßinstrumenten verbunden werden kann, die eine Anzahl von Funktionen der Vorrichtung betreffen,
**dadurch gekennzeichnet, daß** in dem Computer ein Überwachungsprogramm für diese Funktionen gespeichert ist, mit dessen Hilfe der Computer in der Lage ist, auf der Basis eines Vergleichs der Daten von einem oder mehreren Meßinstrumenten mit Bezugsdaten bezüglich dieser Funktionen eine Diagnose hinsichtlich einer voraussichtlichen Fehlfunktion bei einer oder mehreren Funktionen zu erstellen.

2. Vorrichtung nach Anspruch 1,
**dadurch gekennzeichnet, daß** der Computer derart programmiert ist, daß die Diagnose die voraussichtliche Art der Fehlfunktion umfaßt.

3. Vorrichtung nach Anspruch 1 oder 2,
**dadurch gekennzeichnet, daß** der Computer derart programmiert ist, daß die Diagnose den voraussichtlichen Zeitpunkt oder einen voraussichtlichen Zeitraum für die Fehlfunktion umfaßt.

4. Vorrichtung nach einem der Ansprüche 1 bis 3,
**dadurch gekennzeichnet, daß** der Computer derart programmiert ist, daß die Diagnose eine Warnung an einen Benutzer und/oder einen Servicemechaniker umfaßt.

5. Vorrichtung nach einem der Ansprüche 1 bis 4,
**dadurch gekennzeichnet, daß** der Computer derart programmiert ist, daß die Diagnose eine Anweisung zur Vermeidung der voraussichtlichen Fehlfunktion umfaßt.

6. Vorrichtung nach Anspruch 5,
**dadurch gekennzeichnet, daß** die Anweisung eine Maßnahme umfaßt, die von einem Benutzer und/oder einem Servicemechaniker zu ergreifen ist.

7. Vorrichtung nach einem der Ansprüche 4 bis 6,
**dadurch gekennzeichnet, daß** die Diagnose eine Anweisung an den Benutzer und/oder den Servicemechaniker umfaßt, den Zustand eines Bauteils, das mit der voraussichtlichen Fehlfunktion zu tun hat, zu überprüfen und das Bauteil bei Bedarf zu reparieren und/oder auszutauschen.

8. Vorrichtung nach einem der Ansprüche 5 bis 7,
**dadurch gekennzeichnet, daß** die Anweisung eine Zeitangabe für die zu ergreifende Maßnahme umfaßt.

9. Vorrichtung nach einem der Ansprüche 1 bis 8,
**dadurch gekennzeichnet, daß** der Computer geeignet ist, die Diagnose aus einer verfügbaren Auswahl an Diagnosen bezüglich dieser Funktionen auszuwählen.

10. Vorrichtung nach Anspruch 9,
**dadurch gekennzeichnet, daß** die Auswahl an Diagnosen zumindest teilweise von der Größe der zu melkenden Tierherde abhängt.

11. Vorrichtung nach Anspruch 10,
**dadurch gekennzeichnet, daß** die Vorrichtung mit Mitteln versehen ist, um die verfügbare Auswahl an Diagnosen anzupassen und/oder auszuweiten.

12. Vorrichtung nach Anspruch 11,
**dadurch gekennzeichnet, daß** die Mittel geeignet sind, Diagnosen anzupassen oder neue Diagnosen hinzuzufügen, und zwar auf der Basis von Mustern von Daten von den Meßinstrumenten, die während des Betriebs der Vorrichtung erstellt wurden.

13. Vorrichtung nach Anspruch 11 oder 12,
**dadurch gekennzeichnet, daß** die Vorrichtung geeignet ist, die verfügbare Auswahl an Diagnosen anzupassen und/oder auszuweiten, und zwar in Abhängigkeit von der Größe der zu melkenden Tierherde und/oder der Intensität, mit der die Vorrichtung betrieben wird.

14. Vorrichtung nach einem der Ansprüche 1 bis 13,
**dadurch gekennzeichnet, daß** die Vorrichtung geeignet ist, die erstellte Diagnose anzuzeigen.

15. Vorrichtung nach einem der Ansprüche 1 bis 14,
**dadurch gekennzeichnet, daß** die Vorrichtung geeignet ist, zumindest die zur erstellten Diagnose gehörende Anweisung anzuzeigen.

16. Vorrichtung nach einem der Ansprüche 1 bis 15,
**dadurch gekennzeichnet, daß** die Vorrichtung geeignet ist, die erstellte Diagnose oder zumindest die zugehörige Anweisung optisch und/oder akustisch anzuzeigen.

17. Vorrichtung nach einem der Ansprüche 1 bis 16,
**dadurch gekennzeichnet, daß** die Meßinstrumente mindestens einen Sensor umfassen.

18. Vorrichtung nach einem der Ansprüche 1 bis 17,
**dadurch gekennzeichnet, daß** die Meßinstrumente zumindest eine Uhr umfassen.

19. Vorrichtung nach einem der Ansprüche 1 bis 18,
**dadurch gekennzeichnet, daß** die Meßinstrumente zumindest einen Zähler umfassen.

20. Vorrichtung nach einem der Ansprüche 1 bis 19,
**dadurch gekennzeichnet, daß** die Bezugsdaten einen Zeitraum für einen gemessenen Wert umfassen, der mittels eines oder mehrerer Meßinstrumente zu ermitteln ist.

21. Vorrichtung nach einem der Ansprüche 1 bis 20,
**dadurch gekennzeichnet, daß** die Bezugsdaten eine voraussichtliche Lebensdauer oder eine voraussichtliche störungsfreie Nutzungsdauer eines funktionsrelevanten Bauteils der Vorrichtung umfassen.

22. Vorrichtung nach einem der Ansprüche 1 bis 21,
**dadurch gekennzeichnet, daß** der Computer geeignet ist, parallel mehr als eine Diagnose zu erstellen.

23. Vorrichtung nach Anspruch 22,
**dadurch gekennzeichnet, daß** die Vorrichtung geeignet ist, jeder Diagnose eine Dringlichkeit zuzuordnen.

24. Vorrichtung nach Anspruch 23,
**dadurch gekennzeichnet, daß** die Vorrichtung geeignet ist, die erstellten Diagnosen oder zumindest die zugehörigen Anweisungen in der Reihenfolge ihrer Dringlichkeit anzuzeigen.

25. Vorrichtung nach einem der Ansprüche 1 bis 24,
**dadurch gekennzeichnet, daß** der Computer derart programmiert ist, daß bei Feststellen eines steigenden Stromverbrauchs durch ein oder mehrere Meßinstrumente eine Diagnose erstellt wird, die die Anweisung "Spülung und/oder Motoren überprüfen" enthält.

26. Vorrichtung nach einem der Ansprüche 1 bis 25,
**dadurch gekennzeichnet, daß** der Computer derart programmiert ist, daß bei Feststellen einer abweichenden Luftverbrauchskurve durch ein oder mehrere Meßinstrumente eine Diagnose erstellt wird, die die Anweisung "Luftsystem und/oder Kompressor überprüfen" enthält.

27. Vorrichtung nach einem der Ansprüche 1 bis 26,
**dadurch gekennzeichnet, daß** der Computer derart programmiert ist, daß bei Feststellen einer abweichenden Wasserverbrauchskurve durch ein oder mehrere Meßinstrumente eine Diagnose erstellt wird, die den Hinweis "Leck und/oder Verstopfung" enthält.

28. Vorrichtung nach einem der Ansprüche 1 bis 27,
**dadurch gekennzeichnet, daß** der Computer derart programmiert ist, daß bei Feststellen einer abweichenden Milchableitung in den Milchtank durch ein oder mehrere Meßinstrumente eine Diagnose erstellt wird, die den Hinweis "Leck und/oder Verstopfung eines Milchfilters" enthält.

29. Vorrichtung nach einem der Ansprüche 1 bis 28,
**dadurch gekennzeichnet, daß** der Computer derart programmiert ist, daß bei Feststellen einer abweichenden Futterzufuhr durch ein oder mehrere Meßinstrumente eine Diagnose erstellt wird, die den Hinweis "Leck und/oder Verstopfung einer Futterschnecke" enthält.

30. Vorrichtung nach einem der Ansprüche 1 bis 29,
**dadurch gekennzeichnet, daß** der Computer derart programmiert ist, daß bei Feststellen einer abweichenden Lautstärkemessung durch ein oder mehrere Meßinstrumente eine Diagnose erstellt wird, die die Anweisung "Vakuumpumpe und/oder Pulsator überprüfen" enthält.

31. Vorrichtung nach einem der Ansprüche 1 bis 30,
**dadurch gekennzeichnet, daß** der Computer derart programmiert ist, daß bei Feststellen einer abweichenden Befüllzeit für einen Wasserbehälter durch ein oder mehrere Meßinstrumente eine Diagnose erstellt wird, die den Hinweis "Ungenügender Wasserdruck und/oder Leck" enthält.

32. Vorrichtung nach einem der Ansprüche 1 bis 31,
**dadurch gekennzeichnet, daß** der Computer derart programmiert ist, daß bei Feststellen fehlgeschlagener Anschlußvorgänge der Zitzenbecher und/oder eines abweichenden Gewichts von zu melkenden Tieren durch ein oder mehrere Meßinstrumente eine Diagnose erstellt wird, die den Hinweis "Wiegeboden blockiert und/oder Fehlfunktion der Wägedose" enthält.

33. Vorrichtung nach einem der Ansprüche 1 bis 32,
**dadurch gekennzeichnet, daß** der Computer derart programmiert ist, daß bei Feststellen eines abweichenden Signalmusters einer Futterwägedose bei verschiedenen Tieren durch ein oder mehrere Meßinstrumente eine Diagnose erstellt wird, die den Hinweis "Futtertrog blockiert und/oder Fehlfunktion der Wägedose" enthält.

34. Vorrichtung nach einem der Ansprüche 1 bis 33,
**dadurch gekennzeichnet, daß** der Computer derart programmiert ist, daß bei Feststellen einer positiven Abweichung vom Nullwert beim Gewicht des Melkboxbodens durch ein oder mehrere Meßinstrumente eine Diagnose erstellt wird, die den Hinweis "Ansammlung von Schmutz auf dem Melkboxboden" enthält.

35. Vorrichtung nach einem der Ansprüche 1 bis 34,
**dadurch gekennzeichnet, daß** der Computer derart programmiert ist, daß bei Feststellen eines erhöhten Luftverbrauchs pro Melkvorgang und/oder pro Reinigungsvorgang durch ein oder mehrere Meßinstrumente eine Diagnose erstellt wird, die den Hinweis "Undichte Ventile" enthält.

36. Vorrichtung nach einem der Ansprüche 1 bis 35,
**dadurch gekennzeichnet, daß** der Computer derart programmiert ist, daß bei Feststellen einer erhöhten Leitfähigkeit des Vorspülwassers am Ende des Vorspülens durch ein oder mehrere Meßinstrumente eine Diagnose erstellt wird, die folgenden Hinweis enthält: "Ungenügendes Vorspülen wegen zu niedrigen Wasserdruckes und/oder ungenügender Entleerung beim Durchblasen der Leitung und/oder undichten Dreiwegeventil-Behälters und/oder verschmutzter defekter und/oder abgedrifteter Leitfähigkeitssensoren".

37. Vorrichtung nach einem der Ansprüche 1 bis 36,
**dadurch gekennzeichnet, daß** der Computer derart programmiert ist, daß bei Feststellen einer erhöhten Leitfähigkeit des Hauptreinigungswassers am Ende der Hauptreinigung durch ein oder mehrere Meßinstrumente eine Diagnose erstellt wird, die folgenden Hinweis enthält: "Ungenügende Hauptreinigung wegen zu niedriger Laugen-Säure-Konzentration und/oder zu seltener Laugen-Säure-Reinigung und/oder verschmutzter defekter und/oder abgedrifteter Leitfähigkeitssensoren".

38. Vorrichtung nach einem der Ansprüche 1 bis 37,
**dadurch gekennzeichnet, daß** der Computer derart programmiert ist, daß bei Feststellen einer erhöhten Leitfähigkeit des Nachspülwassers am Ende des Nachspülens durch ein oder mehrere Meßinstrumente eine Diagnose erstellt wird, die den Hinweis "Ungenügendes Nachspülen und/oder verschmutzte defekte und/oder abgedriftete Leitfähigkeitssensoren" enthält.

39. Vorrichtung nach einem der Ansprüche 1 bis 38,
**dadurch gekennzeichnet, daß** der Computer derart programmiert ist, daß bei Feststellen der automatischen wiederholten Abscheidung von Milch von verschiedenen Tieren durch ein oder mehrere Meßinstrumente eine Diagnose erstellt wird, die die Anweisung enthält: "Auf der Basis der abgeschiedenen Milch prüfen, ob die Sensoren Fehlfunktionen aufweisen".

40. Vorrichtung nach einem der Ansprüche 1 bis 39,
**dadurch gekennzeichnet, daß** der Computer derart programmiert ist, daß bei Feststellen einer stärkeren Bewegung des Wiegebodens als üblich durch ein oder mehrere Meßinstrumente eine Diagnose erstellt wird, die die Anweisung "Vakuumniveau der Vakuumpumpe und/oder Zustand der Zitzenbecherauskleidungen überprüfen" enthält.

41. Vorrichtung nach einem der Ansprüche 1 bis 40,
**dadurch gekennzeichnet, daß** der Computer derart programmiert ist, daß bei Feststellen der Nichtaufnahme von Futter bei mehreren Tieren durch ein oder mehrere Meßinstrumente eine Diagnose erstellt wird, die die Anweisung "Wägedose des Futtertroges überprüfen" enthält.

42. Vorrichtung nach einem der Ansprüche 1 bis 41,
**dadurch gekennzeichnet, daß** der Computer derart programmiert ist, daß bei Feststellen einer abnehmenden Abpumpgeschwindigkeit von Milch aus dem Milchsammelglas zu dem Milchtank durch ein oder mehrere Meßinstrumente eine Diagnose erstellt wird, die den Hinweis "Milchfilter und/oder -pumpe verstopft" enthält.

43. Vorrichtung nach einem der Ansprüche 1 bis 42,
**dadurch gekennzeichnet, daß** der Computer derart programmiert ist, daß bei Feststellen einer Abweichung des Schwerpunktes des Melkboxbodens mit dem zu melkenden Tier durch ein oder mehrere Meßinstrumente eine Diagnose erstellt wird, die den Hinweis "Futter verbraucht und/oder Futterschnecke und/oder Wägedose des Futtertroges defekt" enthält.

44. Vorrichtung nach einem der Ansprüche 1 bis 43,
**dadurch gekennzeichnet, daß** der Computer derart programmiert ist, daß bei Feststellen einer längeren Anschlußzeit der Zitzenbecher als üblich und einer stärkeren Bewegung des Wiegebodens als üblich durch ein oder mehrere Meßinstrumente eine Diagnose erstellt wird, die die Anweisung "Futterschnecken und/oder Anwesenheit von Schädlingen überprüfen" enthält.

45. Vorrichtung nach einem der Ansprüche 1 bis 44,
**dadurch gekennzeichnet, daß** der Computer derart programmiert ist, daß bei Feststellen eines veränderten Milchflusses durch ein oder mehrere Meßinstrumente eine Diagnose erstellt wird, die folgende Anweisung enthält: "Pulsiereinstellungen überprüfen; Futter aufgebraucht und/oder Futterschnecke und/oder Wägedose des Futtertroges defekt".

46. Vorrichtung nach einem der Ansprüche 1 bis 45,
**dadurch gekennzeichnet, daß** der Computer derart programmiert ist, daß bei Feststellen der Abwesenheit eines Vakuums in einem Zitzenbecher nach mehreren Versuchen durch ein oder mehrere Meßinstrumente eine Diagnose erstellt wird, die die Anweisung "Kippmechanismus und/oder Schnur des Zitzenbechers und/oder Laserfenster überprüfen" enthält.

47. Vorrichtung nach einem der Ansprüche 1 bis 46,
**dadurch gekennzeichnet, daß** der Computer derart programmiert ist, daß bei Feststellen einer kürzeren Anschlußzeit bei einem Zitzenbecher im Verhältnis zu den anderen Zitzenbechern durch ein oder mehrere Meßinstrumente eine Diagnose erstellt wird, die die Anweisung "Position des Zitzenbechers und/oder der Zitzenbecherauskleidung (Schaft und Oberseite) überprüfen" enthält.

48. Vorrichtung nach einem der Ansprüche 1 bis 47,
**dadurch gekennzeichnet, daß** der Computer derart programmiert ist, daß bei Feststellen einer niedrigeren durchschnittlichen Melkgeschwindigkeit und/oder eines geringeren durchschnittlichen Milchflusses durch ein oder mehrere Meßinstrumente eine Diagnose erstellt wird, die die Anweisung "Vakuumniveau und/oder Pulsiereinstellungen und/oder Auskleidungen der Zitzenbecher überprüfen" enthält.

49. Vorrichtung nach einem der Ansprüche 1 bis 48,
**dadurch gekennzeichnet, daß** der Computer derart programmiert ist, daß bei Feststellen einer längeren Anschlußzeit bei allen Zitzenbechern durch ein oder mehrere Meßinstrumente eine Diagnose erstellt wird, die den Hinweis "Laserfenster verschmutzt und/oder Leck in einem Hubzylinder" enthält.

50. Vorrichtung nach einem der Ansprüche 1 bis 49,
**dadurch gekennzeichnet, daß** der Computer derart programmiert ist, daß bei Feststellen eines abweichenden Signalmusters eines Milchflußsensors bei verschiedenen Tieren durch ein oder mehrere Meßinstrumente eine Diagnose erstellt wird, die die Anweisung "Auskleidung und/oder Ansaugöffnung des Zitzenbechers überprüfen" enthält.

51. Vorrichtung nach einem der Ansprüche 1 bis 50,
**dadurch gekennzeichnet, daß** der Computer derart programmiert ist, daß bei Feststellen eines abweichenden Pulsiermusters bei allen Zitzenbechern durch ein oder mehrere Meßinstrumente eine Diagnose erstellt wird, die die Anweisung "Vakuumniveau und/oder Vakuumleitung des Pulsators überprüfen" enthält.

52. Vorrichtung nach einem der Ansprüche 1 bis 51,
**dadurch gekennzeichnet, daß** der Computer derart programmiert ist, daß bei Feststellen eines abweichenden Zeitaufwandes zur Erzeugung eines Vakuums durch ein oder mehrere Meßinstrumente eine Diagnose erstellt wird, die die Anweisung "Vakuumpumpe und/oder Austreten von Luft überprüfen" enthält.

53. Vorrichtung nach einem der Ansprüche 1 bis 52,
**dadurch gekennzeichnet, daß** der Computer derart programmiert ist, daß bei Feststellen eines abweichenden Zeitaufwandes für eine bekannte Bewegung durch ein oder mehrere Meßinstrumente eine Diagnose erstellt wird, die den Hinweis "Antriebsmechanismus defekt und/oder Leck" enthält.

54. Vorrichtung nach einem der Ansprüche 1 bis 53,
**dadurch gekennzeichnet, daß** der Computer derart programmiert ist, daß bei Feststellen von abweichenden Daten des Milchkühltanks (Temperatur, Reinigungszeiten, Reinigungstemperatur, Milchmengen, Alarme) durch ein oder mehrere Meßinstrumente eine Diagnose erstellt wird, die die Anweisung "Kühlsystem und/oder Reinigungssystem Milchkühltank überprüfen" enthält.

55. Vorrichtung nach einem der Ansprüche 1 bis 54,
**dadurch gekennzeichnet, daß** der Computer derart programmiert ist, daß bei Feststellen einer Diskrepanz zwischen Milchleistungsdaten des Milchmengenmessers und Daten des Inhaltsmessers des Milchtanks durch ein oder mehrere Meßinstrumente eine Diagnose erstellt wird, die die Anweisung "Milchmengenmesser und/oder Inhaltsmesser des Milchtanks überprüfen" enthält.

56. Vorrichtung nach einem der Ansprüche 1 bis 55,
**dadurch gekennzeichnet, daß** der Computer derart programmiert ist, daß bei Feststellen einer erhöhten Anzahl von Schrittmotorfehlern durch ein oder mehrere Meßinstrumente eine Diagnose erstellt wird, die die Anweisung "Schrittmotor überprüfen" enthält.

57. Vorrichtung nach einem der Ansprüche 1 bis 56,
**dadurch gekennzeichnet, daß** der Computer derart programmiert ist, daß bei Feststellen einer auf Null reduzierten Besuchsfrequenz des Melkroboters durch ein oder mehrere Meßinstrumente eine Diagnose erstellt wird, die den Hinweis "Tier versperrt Eingang und/oder Ausgang und/oder Tür defekt" enthält.

58. Vorrichtung nach einem der Ansprüche 1 bis 57,
**dadurch gekennzeichnet, daß** der Computer derart programmiert ist, daß bei Feststellen einer wiederholten Nichtidentifikation einer Anzahl von Tieren durch ein oder mehrere Meßinstrumente eine Diagnose erstellt wird, die die Anweisung "Tieridentifikationssystem überprüfen" enthält.

59. Vorrichtung nach einem der Ansprüche 1 bis 58,
**dadurch gekennzeichnet, daß** der Computer derart programmiert ist, daß bei Feststellen eines abweichenden Pulsiermusters durch ein oder mehrere Meßinstrumente eine Diagnose erstellt wird, die die Anweisung "Auskleidung der Milchpulsierleitung und/oder Leitungsabsperrventile überprüfen" enthält.

60. Vorrichtung nach einem der Ansprüche 1 bis 59,
**dadurch gekennzeichnet, daß** der Computer derart programmiert ist, daß bei Feststellen einer Diskrepanz zwischen dem Gewichtsmuster des zu melkenden Tieres während des Melkens und der gemessenen Milchertragsmenge sowie zwischen dem verzehrten Futter und dem ausgeschiedenen Kot durch ein oder mehrere Meßinstrumente eine Diagnose erstellt wird, die die Anweisung "Wiegesensoren überprüfen" enthält.

61. Vorrichtung nach einem der Ansprüche 1 bis 60,
**dadurch gekennzeichnet, daß** der Computer derart programmiert ist, daß bei Feststellen eines erhöhten maximalen Milchflusses durch ein oder mehrere Meßinstrumente eine Diagnose erstellt wird, die die Anweisung "Schwimmer im Milchsammelglas überprüfen" enthält.

62. Vorrichtung nach einem der Ansprüche 1 bis 61,
**dadurch gekennzeichnet, daß** der Computer derart programmiert ist, daß bei Feststellen eines verringerten durchschnittlichen Milchflusses und eines verringerten maximalen Milchflusses durch ein oder mehrere Meßinstrumente eine Diagnose erstellt wird, die die Anweisung "Schwimmer im Milchsammelglas überprüfen" enthält.

63. Vorrichtung nach einem der Ansprüche 1 bis 62,
**dadurch gekennzeichnet, daß** der Computer derart programmiert ist, daß bei Feststellen eines längeren Zeitraumes zwischen der Erzeugung eines Vakuums in einem Zitzenbecher und dem Einsetzen des Milchflusses aus dem betreffenden Euterviertel in Kombination mit einer kürzeren Melkzeit des betreffenden Euterviertels durch ein oder mehrere Meßinstrumente eine Diagnose erstellt wird, die den Hinweis "Unzureichende Empfindlichkeit des betreffenden Milchstromsensors" enthält.

64. Vorrichtung nach einem der Ansprüche 1 bis 63,
**dadurch gekennzeichnet, daß** der Computer derart programmiert ist, daß bei Feststellen eines kürzeren Zeitraumes zwischen der Erzeugung eines Vakuums in einem Zitzenbecher und dem Einsetzen des Milchflusses aus dem betreffenden Euterviertel in Kombination mit einer längeren Melkzeit des betreffenden Euterviertels durch ein oder mehrere Meßinstrumente eine Diagnose erstellt wird, die den Hinweis "Zu hohe Empfindlichkeit des betreffenden Milchstromsensors" enthält.

65. Vorrichtung nach einem der Ansprüche 1 bis 64,
**dadurch gekennzeichnet, daß** der Computer derart programmiert ist, daß bei Feststellen eines längeren Zeitraumes zwischen der Erzeugung eines Vakuums in einem Zitzenbecher und dem Einsetzen des jeweiligen Milchflusses aus dem linken oder dem rechten Euterviertel in Kombination mit einer kürzeren Melkzeit der betreffenden Euterviertel durch ein oder mehrere Meßinstrumente eine Diagnose erstellt wird, die den Hinweis "Leck in einer Zitzenbecherauskleidung und/oder Pulsierleitung und/oder defekter Pulsator" enthält.

66. Vorrichtung nach einem der Ansprüche 1 bis 65,
**dadurch gekennzeichnet, daß** der Computer derart programmiert ist, daß bei Feststellen großer Unterschiede zwischen den Euterviertel bezüglich des Zeitraumes zwischen der Erzeugung eines Vakuums in einem Zitzenbecher und dem Einsetzen des entsprechenden Milchflusses durch ein oder mehrere Meßinstrumente eine Diagnose erstellt wird, die die Anweisung "Milchflußsensoren überprüfen" enthält.

67. Vorrichtung nach einem der Ansprüche 1 bis 66,
**dadurch gekennzeichnet, daß** der Computer derart programmiert ist, daß bei Feststellen einer erhöhten Anzahl von erfolglosen Versuchen zum Anschließen der Zitzenbecher durch ein oder mehrere Meßinstrumente eine Diagnose erstellt wird, die die Anweisung "Lasermeßsystem überprüfen" enthält.

68. Vorrichtung nach einem der Ansprüche 1 bis 67,
**dadurch gekennzeichnet, daß** der Computer derart programmiert ist, daß bei Feststellen eines abweichenden Leistungswertes (kg Milch pro Stunde) durch ein oder mehrere Meßinstrumente eine Diagnose erstellt wird, die die Anweisung "Melkroboter überprüfen" enthält.

69. Vorrichtung zum automatischen Melken von Tieren, wobei die Vorrichtung mit einem Melkroboter und einem Computer versehen ist, wobei der Computer an eine Anzahl von Meßinstrumenten anschließbar ist, die eine Anzahl von Konditionsparametern eines zu melkenden Tieres betreffen,
**dadurch gekennzeichnet, daß** in dem Computer ein Überwachungsprogramm für diese Parameter gespeichert ist, mit dessen Hilfe der Computer in der Lage ist, auf der Basis eines Vergleichs der Daten von einem oder mehreren Meßinstrumenten mit Bezugsdaten bezüglich dieser Parameter eine Diagnose hinsichtlich einer voraussichtlichen unerwünschten Abweichung bei einem oder mehreren Parametern zu erstellen.

70. Vorrichtung nach einem der Ansprüche 1 bis 69,
**dadurch gekennzeichnet, daß** der Computer geeignet ist, die Bezugsdaten auf der Basis von gemessenen Mengen ständig anzupassen.

71. Vorrichtung nach einem der Ansprüche 1 bis 70,
**dadurch gekennzeichnet, daß** der Computer geeignet ist, die Bezugsdaten automatisch zu erzeugen.

72. Vorrichtung nach einem der Ansprüche 1 bis 71,
**dadurch gekennzeichnet, daß** die Bezugsdaten von der zu melkenden Tierherde abhängen.

73. Vorrichtung nach einem der Ansprüche 1 bis 72,
**dadurch gekennzeichnet, daß** die Bezugsdaten von der Intensität abhängen, mit der die Vorrichtung betrieben wird.

74. Vorrichtung nach einem der Ansprüche 1 bis 73,
**dadurch gekennzeichnet, daß** die Vorrichtung mit Mitteln versehen ist, um die von dem Computer erstellte Diagnose per Telefon und/oder als SMS-Nachricht an einen Benutzer und/oder einen Servicemechaniker zu senden.

75. Vorrichtung nach einem der Ansprüche 70 bis 74,
**dadurch gekennzeichnet, daß** der Computer derart programmiert ist, daß bei Feststellen eines Profils eines langsam einsetzenden Milchflusses durch ein oder mehrere Meßinstrumente eine Diagnose erstellt wird, die die Anweisung "Vorbehandlung verlängern" enthält.

76. Vorrichtung nach einem der Ansprüche 70 bis 75,
**dadurch gekennzeichnet, daß** der Computer derart programmiert ist, daß bei Feststellen einer Kombination von erhöhter Leitfähigkeit, längerer Totzeit sowie abweichender Farbe und Volumen bei einem bestimmten Euterviertel durch ein oder mehrere Meßinstrumente eine Diagnose erstellt wird, die den Hinweis "Mastitis in diesem Euterviertel" enthält.

77. Vorrichtung nach einem der Ansprüche 70 bis 76,
**dadurch gekennzeichnet, daß** der Computer derart programmiert ist, daß bei Feststellen einer erhöhten Leerungsgeschwindigkeit des Futtertroges bei einem Tier durch ein oder mehrere Meßinstrumente eine Diagnose erstellt wird, die die Anweisung "Futterration des Tieres überprüfen" enthält.

78. Vorrichtung nach einem der Ansprüche 70 bis 77,
**dadurch gekennzeichnet, daß** der Computer derart programmiert ist, daß bei Feststellen einer verminderten Leerungsgeschwindigkeit des Futtertroges bei mehreren Tieren durch ein oder mehrere Meßinstrumente eine Diagnose erstellt wird, die den Hinweis "Futter verdorben und/oder nicht schmackhaft" enthält.

79. Vorrichtung nach einem der Ansprüche 70 bis 78,
**dadurch gekennzeichnet, daß** der Computer derart programmiert ist, daß bei Feststellen eines abweichenden Signalmusters bei einem Milchflußsensor durch ein oder mehrere Meßinstrumente eine Diagnose erstellt wird, die die Anweisung "Betreffendes Euterviertel überprüfen" enthält.

80. Vorrichtung nach einem der Ansprüche 70 bis 79,
**dadurch gekennzeichnet, daß** der Computer derart programmiert ist, daß bei Feststellen einer Abweichung bei der Milchleistung, der Temperatur, der Futteraufnahme und der Bewegung in der Box durch ein oder mehrere Meßinstrumente eine Diagnose erstellt wird, die den Hinweis "Achtung Brunst" enthält.

81. Vorrichtung nach einem der Ansprüche 70 bis 80,
**dadurch gekennzeichnet, daß** der Computer derart programmiert ist, daß bei Feststellen einer verminderten Futteraufnahme eines bestimmten Tieres durch ein oder mehrere Meßinstrumente eine Diagnose erstellt wird, die die Anweisung "Gesundheit des Tieres überprüfen" enthält.

82. Vorrichtung nach einem der Ansprüche 70 bis 81,
**dadurch gekennzeichnet, daß** der Computer derart programmiert ist, daß bei Feststellen einer großen Divergenz bei den Messungen des Wiegebodens durch ein oder mehrere Meßinstrumente eine Diagnose erstellt wird, die den Hinweis "Tier unruhig" enthält.

83. Vorrichtung nach einem der Ansprüche 70 bis 82,
**dadurch gekennzeichnet, daß** der Computer derart programmiert ist, daß bei Feststellen einer großen Divergenz bei den Messungen des Gewichts des Futtertroges durch ein oder mehrere Meßinstrumente eine Diagnose erstellt wird, die den Hinweis "Tier unruhig" enthält.

84. Vorrichtung nach einem der Ansprüche 70 bis 83,
**dadurch gekennzeichnet, daß** der Computer derart programmiert ist, daß bei Feststellen einer verminderten Leerungsgeschwindigkeit des Futtertroges bei einem Tier durch ein oder mehrere Meßinstrumente eine Diagnose erstellt wird, die die Anweisung "Gesundheit des Tieres überprüfen" enthält.

85. Vorrichtung nach einem der Ansprüche 70 bis 84,
**dadurch gekennzeichnet, daß** der Computer derart programmiert ist, daß bei Feststellen einer verminderten Besuchsfrequenz eines Tieres beim Melkroboter durch ein oder mehrere Meßinstrumente eine Diagnose erstellt wird, die die Anweisung "Gesundheit des Tieres überprüfen" enthält.

86. Vorrichtung nach einem der Ansprüche 70 bis 85,
**dadurch gekennzeichnet, daß** der Computer derart programmiert ist, daß bei Feststellen einer zu niedrigen Milchleistung im Verhältnis zur Futterration des Tieres durch ein oder mehrere Meßinstrumente eine Diagnose erstellt wird, die den Hinweis "Futterration nicht korrekt und/oder Aktivität des Tieres überprüfen" enthält.

87. Vorrichtung nach einem der Ansprüche 70 bis 86,
**dadurch gekennzeichnet, daß** der Computer derart programmiert ist, daß bei Feststellen einer Höhenverschiebung der Zitzenpositionen durch ein oder mehrere Meßinstrumente eine Diagnose erstellt wird, die den Hinweis "Wassersucht und/oder durchhängendes Euter" enthält.

88. Vorrichtung nach einem der Ansprüche 70 bis 87,
**dadurch gekennzeichnet, daß** der Computer derart programmiert ist, daß bei Feststellen eines langsamen Betretens und/oder Verlassens des Melkroboters durch ein Tier durch ein oder mehrere Meßinstrumente eine Diagnose erstellt wird, die die Anweisung "Klauenzustand überprüfen" enthält.

## Revendications

1. Construction pour la traite automatique des animaux, ladite construction étant dotée d'un robot de traite et d'un ordinateur qui est capable d'être connecté à un certain nombre d'instruments de mesure qui sont liés à un certain nombre de fonctions de la construction, **caractérisée en ce qu'**un programme de contrôle pour lesdites fonctions est installé dans l'ordinateur, grâce auquel l'ordinateur est approprié pour déterminer, sur la base d'une comparaison des données d'un ou plusieurs instruments de mesure par rapport aux données liées aux dites fonctions, un diagnostic lié à un défaut prévu d'une ou plusieurs desdites fonctions.

2. Construction selon la revendication 1, **caractérisée en ce que** l'ordinateur est programmé de sorte que le diagnostic comprend la nature prévue du défaut.

3. Construction selon la revendication 1 ou la revendication 2, **caractérisée en ce que** l'ordinateur est programmé de sorte que le diagnostic comprend le point prévu du temps ou un intervalle de temps prévu pour le défaut.

4. Construction selon l'une quelconque des revendications 1 à 3, **caractérisée en ce que** l'ordinateur est programmé de sorte que le diagnostic comprend un avertissement à un utilisateur et/ou un préposé à l'entretien.

5. Construction selon l'une quelconque des revendications 1 à 4, **caractérisée en ce que** l'ordinateur est programmé de sorte que le diagnostic comprend une instruction pour éviter le défaut prévu.

6. Construction selon la revendication 5, **caractérisée en ce que** l'instruction comprend une action à entreprendre par un utilisateur et/ou un préposé à l'entretien.

7. Construction selon l'une quelconque des revendications 4 à 6, **caractérisée en ce que** le diagnostic comprend une indication à l'utilisateur et/ou le préposé à l'entretien pour vérifier la condition d'un élément concerné par le défaut prévu et pour réparer et/ou remplacer ledit élément au besoin.

8. Construction selon l'une quelconque des revendications 5 à 7, **caractérisée en ce que** l'instruction comprend une indication de temps pour l'action à entreprendre.

9. Construction selon l'une quelconque des revendications 1 à 8, **caractérisée en ce que** l'ordinateur est approprié pour choisir le diagnostic parmi un ensemble disponible de diagnostics concernés par lesdites fonctions.

10. Construction selon la revendication 9, **caractérisée en ce que** l'ensemble de diagnostics dépend au moins partiellement de la taille du troupeau d'animaux à traire.

11. Construction selon la revendication 10, **caractérisée en ce que** la construction est dotée de moyens pour adapter et/ou étendre l'ensemble disponible de diagnostics.

12. Construction selon la revendication 11, **caractérisée en ce que** les moyens sont appropriés pour ajuster les diagnostics ou ajouter de nouveaux diagnostics sur la base de configurations de données des instruments de mesure établies au cours de l'utilisation de la construction.

13. Construction selon la revendication 11 ou la revendication 12, **caractérisée en ce que** les moyens sont appropriés pour adapter et/ou étendre l'ensemble disponible de diagnostics en fonction de la taille du troupeau d'animaux à traire et/ou l'intensité avec laquelle la construction est utilisée.

14. Construction selon l'une quelconque des revendications 1 à 13, **caractérisée en ce que** la construction est appropriée pour indiquer le diagnostic établi.

15. Construction selon l'une quelconque des revendications 1 à 14, **caractérisée en ce que** la construction est appropriée pour indiquer au moins l'instruction concernant le diagnostic établi.

16. Construction selon l'une quelconque des revendications 1 à 15, **caractérisée en ce que** la construction est appropriée pour indiquer visuellement et/ou acoustiquement le diagnostic établi ou au moins l'instruction concernant celui-ci.

17. Construction selon l'une quelconque des revendications 1 à 16, **caractérisée en ce que** les instruments de mesure comprennent au moins un capteur.

18. Construction selon l'une quelconque des revendications 1 à 17, **caractérisée en ce que** les instruments de mesure comprennent au moins une horloge.

19. Construction selon l'une quelconque des revendications 1 à 18, **caractérisée en ce que** les instruments de mesure comprennent au moins un compteur.

20. Construction selon l'une quelconque des revendications 1 à 19, **caractérisée en ce que** les données de référence comprennent un intervalle pour une valeur mesurée à déterminer au moyen d'un ou plusieurs instruments de mesure.

21. Construction selon l'une quelconque des revendications 1 à 20, **caractérisée en ce que** les données de référence comprennent une vie prévue ou une vie utile exempte de défaut prévue pour un élément de la construction lié à la fonction.

22. Construction selon l'une quelconque des revendications 1 à 21, **caractérisée en ce que** l'ordinateur est approprié pour déterminer d'une manière parallèle plus d'un diagnostic.

23. Construction selon la revendication 22, **caractérisée en ce qu'**elle est appropriée pour attribuer une urgence à chaque diagnostic.

24. Construction selon la revendication 23, **caractérisée en ce qu'**elle est appropriée pour indiquer le diagnostic déterminé ou au moins les instructions concernant celui-ci dans l'ordre de l'urgence.

25. Construction selon l'une quelconque des revendications 1 à 24, **caractérisée en ce que** l'ordinateur est programmé de sorte que lorsqu'un ou plusieurs instruments de mesure établissent une consommation d'électricité accrue, un diagnostic impliquant la « vérification du rinçage et/ou des moteurs » est déterminé.

26. Construction selon l'une quelconque des revendications 1 à 25, **caractérisée en ce que** l'ordinateur est programmé de sorte que lorsqu'un ou plusieurs instruments de mesure établissent une courbe de consommation d'air déviante, un diagnostic impliquant la « vérification du système d'air et/ou du compresseur » est déterminé.

27. Construction selon l'une quelconque des revendications 1 à 26, **caractérisée en ce que** l'ordinateur est programmé de sorte que lorsqu'un ou plusieurs instruments de mesure établissent une courbe de consommation d'eau déviante, un diagnostic impliquant une « fuite et/ou obstruction » est déterminé.

28. Construction selon l'une quelconque des revendications 1 à 27, **caractérisée en ce que** l'ordinateur est programmé de sorte que lorsqu'un ou plusieurs instruments de mesure établissent une décharge de lait déviante vers le réservoir à lait, un diagnostic impliquant la « fuite et/ou obstruction d'un filtre de lait » est déterminé.

29. Construction selon l'une quelconque des revendications 1 à 28, **caractérisée en ce que** l'ordinateur est programmé de sorte que lorsqu'un ou plusieurs instruments de mesure établissent une alimentation déviante, un diagnostic impliquant la « fuite et/ou obstruction d'une auge d'alimentation » est déterminé.

30. Construction selon l'une quelconque des revendications 1 à 29, **caractérisée en ce que** l'ordinateur est programmé de sorte que lorsqu'un ou plusieurs instruments de mesure établissent une mesure sonore déviante, un diagnostic impliquant la « vérification de la pompe à vide et/ou du pulsateur » est déterminé.

31. Construction selon l'une quelconque des revendications 1 à 30, **caractérisée en ce que** l'ordinateur est programmé de sorte que lorsqu'un ou plusieurs instruments de mesure établissent un temps de remplissage déviant pour un réservoir d'eau, un diagnostic impliquant une « pression d'eau insuffisante et/ou fuite » est déterminé.

32. Construction selon l'une quelconque des revendications 1 à 31, **caractérisée en ce que** l'ordinateur est programmé de sorte que lorsqu'un ou plusieurs instruments de mesure établissent des connexions défectueuses des gobelets-trayeurs et/ou un poids déviant d'animaux à traire, un diagnostic impliquant une « plate-forme de pesée bloquée et/ou défaut de la cellule de pesée » est déterminé.

33. Construction selon l'une quelconque des revendications 1 à 32, **caractérisée en ce que** l'ordinateur est programmé de sorte que lorsqu'un ou plusieurs instruments de mesure établissent une configuration de signal déviante d'une cellule de pesée de la nourriture avec différents animaux, un diagnostic impliquant une « auge bloquée et/ou défaut de la cellule de pesée » est déterminé.

34. Construction selon l'une quelconque des revendications 1 à 33, **caractérisée en ce que** l'ordinateur est programmé de sorte que lorsqu'un ou plusieurs instruments de mesure établissent une dérive positive du niveau zéro du poids de la plate-forme du box, un diagnostic impliquant une « accumulation de saletés sur la plate-forme du box » est déterminé.

35. Construction selon l'une quelconque des revendications 1 à 34, **caractérisée en ce que** l'ordinateur est programmé de sorte que lorsqu'un ou plusieurs instruments de mesure établissent une consommation d'air accrue par traite et/ou par lavage, un diagnostic impliquant une « fuite des valves » est déterminé.

36. Construction selon l'une quelconque des revendications 1 à 35, **caractérisée en ce que** l'ordinateur est programmé de sorte que lorsqu'un ou plusieurs instruments de mesure établissent une conductivité accrue de l'eau de pré-rinçage à la fin du pré-rinçage, un diagnostic impliquant un « pré-rinçage insuffisant du fait d'une pression d'eau trop faible et/ou vidange insuffisante par projection d'air dans le tuyau et/ou fuite du réservoir à trois voies et/ou capteurs de conductivité contaminés, défectueux et/ou en dérive » est déterminé.

37. Construction selon l'une quelconque des revendications 1 à 36, **caractérisée en ce que** l'ordinateur est programmé de sorte que lorsqu'un ou plusieurs instruments de mesure établissent une conductivité accrue de l'eau de nettoyage principal à la fin du nettoyage principal, un diagnostic impliquant un « nettoyage principal insuffisant du fait d'une concentration trop faible en lessive/acide et/ou nettoyage par lessive/acide à fréquence trop faible et/ou capteurs de conductivité contaminés, défectueux et/ou en dérive » est déterminé.

38. Construction selon l'une quelconque des revendications 1 à 37, **caractérisée en ce que** l'ordinateur est programmé de sorte que lorsqu'un ou plusieurs instruments de mesure établissent une conductivité accrue de l'eau de post-rinçage à la fin du post-rinçage, un diagnostic impliquant un « post-rinçage insuffisant et/ou capteurs de conductivité contaminés, défectueux et/ou en dérive » est déterminé.

39. Construction selon l'une quelconque des revendications 1 à 38, **caractérisée en ce que** l'ordinateur est programmé de sorte que lorsqu'un ou plusieurs instruments de mesure établissent la séparation consécutive automatique du lait de différents animaux, un diagnostic impliquant la « vérification, sur la base du lait séparé, de l'existence de défauts dans les capteurs » est déterminé.

40. Construction selon l'une quelconque des revendications 1 à 39, **caractérisée en ce que** l'ordinateur est programmé de sorte que lorsqu'un ou plusieurs instruments de mesure établissent plus de mouvement sur la plate-forme de pesée qu'en moyenne, un diagnostic impliquant la « vérification du niveau de vide de la pompe à vide et/ou l'état des manchons-trayeurs » est déterminé.

41. Construction selon l'une quelconque des revendications 1 à 40, **caractérisée en ce que** l'ordinateur est programmé de sorte que lorsqu'un ou plusieurs instruments de mesure établissent l'absence d'alimentation de différents animaux, un diagnostic impliquant la « vérification de la cellule de pesée de l'auge » est déterminé.

42. Construction selon l'une quelconque des revendications 1 à 41, **caractérisée en ce que** l'ordinateur est programmé de sorte que lorsqu'un ou plusieurs instruments de mesure établissent une vitesse de pompage de lait réduite depuis le récipient à lait vers le réservoir à lait, un diagnostic impliquant 1'« obstruction du filtre de lait et/ou de la pompe » est déterminé.

43. Construction selon l'une quelconque des revendications 1 à 42, **caractérisée en ce que** l'ordinateur est programmé de sorte que lorsqu'un ou plusieurs instruments de mesure établissent une déviation du centre de gravité de la plate-forme du box avec l'animal à traire, un diagnostic impliquant une « nourriture consommée et/ou auge et/ou cellule de pesée de l'auge défectueuse(s) » est déterminé.

44. Construction selon l'une quelconque des revendications 1 à 43, **caractérisée en ce que** l'ordinateur est programmé de sorte que lorsqu'un ou plusieurs instruments de mesure établissent un temps de connexion des gobelets-trayeurs plus long qu'en moyenne et plus de mouvement sur la plate-forme de pesée qu'en moyenne, un diagnostic impliquant la « vérification des auges et/ou la présence de vermine » est déterminé.

45. Construction selon l'une quelconque des revendications 1 à 44, **caractérisée en ce que** l'ordinateur est programmé de sorte que lorsqu'un ou plusieurs instruments de mesure établissent un écoulement de lait modifié, un diagnostic impliquant la « vérification des ajustements d'impulsion ; une nourriture consommée et/ou auge et/ou cellule de pesée de l'auge défectueuse(s) » est déterminé.

46. Construction selon l'une quelconque des revendications 1 à 45, **caractérisée en ce que** l'ordinateur est programmé de sorte que lorsqu'un ou plusieurs instruments de mesure établissent l'absence de vide sur un gobelet-trayeur après plusieurs essais, un diagnostic impliquant la « vérification du mécanisme d'inclinaison et/ou le cordon du gobelet-trayeur et/ou la fenêtre laser » est déterminé.

47. Construction selon l'une quelconque des revendications 1 à 46, **caractérisée en ce que** l'ordinateur est programmé de sorte que lorsqu'un ou plusieurs instruments de mesure établissent un temps de connexion plus réduit avec un gobelet-trayeur qu'avec les autres gobelets-trayeurs, un diagnostic impliquant la « vérification de la position du gobelet-trayeur et/ou du manchon-trayeur (arbre et haut) » est déterminé.

48. Construction selon l'une quelconque des revendications 1 à 47, **caractérisée en ce que** l'ordinateur est programmé de sorte que lorsqu'un ou plusieurs instruments de mesure établissent une vitesse de traite moyenne plus faible et/ou un écoulement de lait moyen plus faible, un diagnostic impliquant la « vérification du niveau de vide et/ou des ajustements d'impulsion et/ou des manchons des gobelets-trayeurs » est déterminé.

49. Construction selon l'une quelconque des revendications 1 à 48, **caractérisée en ce que** l'ordinateur est programmé de sorte que lorsqu'un ou plusieurs instruments de mesure établissent un temps de connexion plus élevé de tous les gobelets-trayeurs, un diagnostic impliquant la « fenêtre laser contaminée et/ou fuite dans un vérin de levage » est déterminé.

50. Construction selon l'une quelconque des revendications 1 à 49, **caractérisée en ce que** l'ordinateur est programmé de sorte que lorsqu'un ou plusieurs instruments de mesure établissent une configuration de signal déviante d'un capteur d'écoulement de lait pour différents animaux, un diagnostic impliquant la « vérification du manchon et/ou de l'ouverture d'aspiration du gobelet-trayeur » est déterminé.

51. Construction selon l'une quelconque des revendications 1 à 50, **caractérisée en ce que** l'ordinateur est programmé de sorte que lorsqu'un ou plusieurs instruments de mesure établissent une configuration d'impulsions déviante pour tous les gobelets-trayeurs, un diagnostic impliquant la « vérification du niveau de vide et/ou de la ligne de vide du pulsateur » est déterminé.

52. Construction selon l'une quelconque des revendications 1 à 51, **caractérisée en ce que** l'ordinateur est programmé de sorte que lorsqu'un ou plusieurs instruments de mesure établissent un temps déviant nécessaire pour établir un vide, un diagnostic impliquant la « vérification de la pompe à vide et/ou fuite d'air » est déterminé.

53. Construction selon l'une quelconque des revendications 1 à 52, **caractérisée en ce que** l'ordinateur est programmé de sorte que lorsqu'un ou plusieurs instruments de mesure établissent un temps déviant nécessaire pour un mouvement connu, un diagnostic impliquant un « mécanisme d'entraînement défectueux et/ou fuite » est déterminé.

54. Construction selon l'une quelconque des revendications 1 à 53, **caractérisée en ce que** l'ordinateur est programmé de sorte que lorsqu'un ou plusieurs instruments de mesure établissent des données déviantes du réservoir de refroidissement du lait (température, temps de nettoyage, température de nettoyage, quantités de lait, avertissements), un diagnostic impliquant la « vérification du système de refroidissement et/ou du système de nettoyage du réservoir de refroidissement du lait » est déterminé.

55. Construction selon l'une quelconque des revendications 1 à 54, **caractérisée en ce que** l'ordinateur est programmé de sorte que lorsqu'un ou plusieurs instruments de mesure établissent une divergence entre les données de rendement laitier du compteur à lait et les données du teneurmètre du réservoir à lait, un diagnostic impliquant la « vérification du compteur à lait et/ou du teneurmètre du réservoir à lait » est déterminé.

56. Construction selon l'une quelconque des revendications 1 à 55, **caractérisée en ce que** l'ordinateur est programmé de sorte que lorsqu'un ou plusieurs instruments de mesure établissent un nombre accru d'erreurs du moteur pas-à-pas, un diagnostic impliquant la « vérification du moteur pas-à-pas » est déterminé.

57. Construction selon l'une quelconque des revendications 1 à 56, **caractérisée en ce que** l'ordinateur est programmé de sorte que lorsqu'un ou plusieurs instruments de mesure établissent une fréquence de visite réduite à zéro du robot de traite, un diagnostic impliquant le « blocage de l'entrée et/ou de là sortie par un animal et/ou barrière défectueuse » est déterminé.

58. Construction selon l'une quelconque des revendications 1 à 57, **caractérisée en ce que** l'ordinateur est programmé de sorte que lorsqu'un ou plusieurs instruments de mesure établissent la non-identification consécutive d'un certain nombre d'animaux, un diagnostic impliquant la « vérification du système d'identification des animaux » est déterminé.

59. Construction selon l'une quelconque des revendications 1 à 58, **caractérisée en ce que** l'ordinateur est programmé de sorte que lorsqu'un ou plusieurs instruments de mesure établissent une configuration d'impulsions déviante, un diagnostic impliquant la « vérification du manchon du tube d'impulsions de lait et/ou des valves d'arrêt du tube » est déterminé.

60. Construction selon l'une quelconque des revendications 1 à 59, **caractérisée en ce que** l'ordinateur est programmé de sorte que lorsqu'un ou plusieurs instruments de mesure établissent une divergence entre la configuration de poids de l'animal à traire au cours de la traite et la quantité mesurée du lait obtenu, de la nourriture consommée et du fumier produit, un diagnostic impliquant la « vérification des capteurs de pesée » est déterminé.

61. Construction selon l'une quelconque des revendications 1 à 60, **caractérisée en ce que** l'ordinateur est programmé de sorte que lorsqu'un ou plusieurs instruments de mesure établissent un écoulement de lait maximum accru, un diagnostic impliquant la « vérification du flotteur dans le récipient à lait » est déterminé.

62. Construction selon l'une quelconque des revendications 1 à 61, **caractérisée en ce que** l'ordinateur est programmé de sorte que lorsqu'un ou plusieurs instruments de mesure établissent un écoulement de lait moyen réduit et un écoulement de lait maximum réduit, il est déterminé un diagnostic impliquant « vérification du flotteur dans un récipient à lait ».

63. Construction selon l'une quelconque des revendications 1 à 62, **caractérisée en ce que** l'ordinateur est programmé de sorte que lorsqu'un ou plusieurs instruments de mesure établissent un temps plus long entre la génération d'un vide dans un gobelet-trayeur et le début de l'écoulement de lait du quart concerné en combinaison avec un temps de traite plus court pour le quart concerné, un diagnostic impliquant une « sensibilité insuffisante du capteur d'écoulement de lait concerné » est déterminé.

64. Construction selon l'une quelconque des revendications 1 à 63, **caractérisée en ce que** l'ordinateur est programmé de sorte que lorsqu'un ou plusieurs instruments de mesure établissent un temps plus court entre la génération d'un vide dans un gobelet-trayeur et le début de l'écoulement de lait du quart concerné en combinaison avec un temps de traite plus long pour le quart concerné, un diagnostic impliquant une « sensibilité trop élevée du capteur d'écoulement de lait concerné » est déterminé.

65. Construction selon l'une quelconque des revendications 1 à 64, **caractérisée en ce que** l'ordinateur est programmé de sorte que lorsqu'un ou plusieurs instruments de mesure établissent un temps plus long entre la génération d'un vide dans un gobelet-trayeur et le début de l'écoulement de lait concerné des quarts de gauche ou de droite en combinaison avec un temps de traite plus court pour les quarts concernés, un diagnostic impliquant une « fuite dans un manchon du gobelet-trayeur et/ou dans le tube d'impulsions et/ou pulsateur défectueux » est déterminé.

66. Construction selon l'une quelconque des revendications 1 à 65, **caractérisée en ce que** l'ordinateur est programmé de sorte que lorsqu'un ou plusieurs instruments de mesure établissent des différences importantes entre les quarts au cours du temps entre la génération d'un vide dans un gobelet-trayeur et le début de l'écoulement de lait concerné, un diagnostic impliquant la « vérification des capteurs d'écoulement de lait » est déterminé.

67. Construction selon l'une quelconque des revendications 1 à 66, **caractérisée en ce que** l'ordinateur est programmé de sorte que lorsqu'un ou plusieurs instruments de mesure établissent un nombre accru d'essais infructueux pour connecter les gobelets-trayeurs, un diagnostic impliquant la « vérification du système de mesure laser » est déterminé.

68. Construction selon l'une quelconque des revendications 1 à 67, **caractérisée en ce que** l'ordinateur est programmé de sorte que lorsqu'un ou plusieurs instruments de mesure établissent une valeur de production déviante (kg de lait par heure), un diagnostic impliquant la « vérification du robot de traite » est déterminé.

69. Construction pour la traite automatique des animaux, ladite construction étant dotée d'un robot de traite et d'un ordinateur, ledit ordinateur pouvant être connecté à un certain nombre d'instruments de mesure qui sont liés à un certain nombre de paramètres de condition d'un animal à traire, **caractérisée en ce qu'**un programme de contrôle pour lesdits paramètres est installé dans l'ordinateur, grâce auquel l'ordinateur est approprié pour déterminer un diagnostic par rapport à une déviation prévue non souhaitée dans un ou plusieurs desdits paramètres sur la base d'une comparaison entre les données issues d'un ou de plusieurs instruments de mesure et les données de référence liées aux dits paramètres.

70. Construction selon l'une quelconque des revendications 1 à 69, **caractérisée en ce que** l'ordinateur est approprié pour adapter en continu les données de référence sur la base des quantités mesurées.

71. Construction selon l'une quelconque des revendications 1 à 70, **caractérisée en ce que** l'ordinateur est approprié pour générer automatiquement les données de référence.

72. Construction selon l'une quelconque des revendications 1 à 71, **caractérisée en ce que** les données de référence dépendent du troupeau des animaux à traire.

73. Construction selon l'une quelconque des revendications 1 à 72, **caractérisée en ce que** les données de référence dépendent de l'intensité avec laquelle la construction est utilisée.

74. Construction selon l'une quelconque des revendications 1 à 73, **caractérisée en ce que** la construction est dotée de moyens pour transmettre le diagnostic déterminé par l'ordinateur par téléphone et/ou sous la forme d'un message SMS à un utilisateur et/ou un préposé à l'entretien.

75. Construction selon l'une quelconque des revendications 70 à 74, **caractérisée en ce que** l'ordinateur est programmé de sorte que lorsqu'un ou plusieurs instruments de mesure établissent un profil d'écoulement de lait à départ lent, un diagnostic impliquant un « prolongement du traitement préalable » est déterminé.

76. Construction selon l'une quelconque des revendications. 70 à 75, **caractérisée en ce que** l'ordinateur est programmé de sorte que lorsqu'un ou plusieurs instruments de mesure établissent une combinaison de conductivité accrue, plus de temps mort de traite, une couleur et un volume déviants pour un quart particulier, un diagnostic impliquant une « mastite pour ledit quart » est déterminé.

77. Construction selon l'une quelconque des revendications 70 à 76, **caractérisée en ce que** l'ordinateur est programmé de sorte que lorsqu'un ou plusieurs instruments de mesure établissent une vitesse accrue de vidange de l'auge pour un animal, il est déterminé un diagnostic impliquant « vérification de la ration des animaux ».

78. Construction selon l'une quelconque des revendications 70 à 77, **caractérisée en ce que** l'ordinateur est programmé de sorte que lorsqu'un ou plusieurs instruments de mesure établissent une vitesse réduite de vidange de l'auge pour différents animaux, un diagnostic impliquant une « nourriture avariée et/ou pas appétissante » est déterminé.

79. Construction selon l'une quelconque des revendications 70 à 78, **caractérisée en ce que** l'ordinateur est programmé de sorte que lorsqu'un ou plusieurs instruments de mesure établissent une configuration de signal déviante avec un capteur d'écoulement de lait, un diagnostic impliquant la « vérification du quart de mamelle concerné » est déterminé.

80. Construction selon l'une quelconque des revendications 70 à 79, **caractérisée en ce que** l'ordinateur est programmé de sorte que lorsqu'un ou plusieurs instruments de mesure établissent une déviation au niveau du rendement en lait, de la température, de la consommation de nourriture et du mouvement dans le box, un diagnostic impliquant une « chaleur dangereuse » est déterminé.

81. Construction selon l'une quelconque des revendications 70 à 80, **caractérisée en ce que** l'ordinateur est programmé de sorte que lorsqu'un ou plusieurs instruments de mesure établissent une consommation de nourriture réduite d'un animal particulier, un diagnostic impliquant la « vérification de la santé de l'animal » est déterminé.

82. Construction selon l'une quelconque des revendications 70 à 81, **caractérisée en ce que** l'ordinateur est programmé de sorte que lorsqu'un ou plusieurs instruments de mesure établissent une divergence importante entre les mesures de la plate-forme de pesée, un diagnostic impliquant la « nervosité d'un animal » est déterminé.

83. Construction selon l'une quelconque des revendications 70 à 82, **caractérisée en ce que** l'ordinateur est programmé de sorte que lorsqu'un ou plusieurs instruments de mesure établissent une divergence importante entre les mesures du poids de l'auge, un diagnostic impliquant la « nervosité d'un animal » est déterminé.

84. Construction selon l'une quelconque des revendications 70 à 83, **caractérisée en ce que** l'ordinateur est programmé de sorte que lorsqu'un ou plusieurs instruments de mesure établissent une vitesse réduite de vidange de l'auge pour un animal, un diagnostic impliquant la « vérification de la santé de l'animal » est déterminé.

85. Construction selon l'une quelconque des revendications 70 à 84, **caractérisée en ce que** l'ordinateur est programmé de sorte que lorsqu'un ou plusieurs instruments de mesure établissent une fréquence de visite réduite d'un animal au robot de traite, un diagnostic impliquant la « vérification de la santé de l'animal » est déterminé.

86. Construction selon l'une quelconque des revendications 70 à 85, **caractérisée en ce que** l'ordinateur est programmé de sorte que lorsqu'un ou plusieurs instruments de mesure établissent un rendement de lait trop faible par rapport à la ration de l'animal, il est déterminé un diagnostic impliquant « ration pas correcte et/ou vérification de l'activité de l'animal ».

87. Construction selon l'une quelconque des revendications 70 à 86, **caractérisée en ce que** l'ordinateur est programmé de sorte que lorsqu'un ou plusieurs instruments de mesure établissent une dérive des positions des tétines en hauteur, un diagnostic impliquant une « mamelle tombante ou affaissée » est déterminé.

88. Construction selon l'une quelconque des revendications 70 à 87, **caractérisée en ce que** l'ordinateur est programmé de sorte que lorsqu'un ou plusieurs instruments de mesure établissent qu'un animal entre et/ou quitte lentement le robot de traite, un diagnostic impliquant la « vérification de l'état du crochet » est déterminé.
